# EUROPÄISCHE PATENTSCHRIFT

(11) **EP 1 600 064 B1**
(45) Veröffentlichungstag und Bekanntmachung des Hinweises auf die Patenterteilung: **14.09.2011**
(21) Anmeldenummer: 05005965.8
(22) Anmeldetag: 18.03.2005
(51) Int. Cl.: A23L 1/32, A23D 7/005

(54) **Fleischfreies Lebensmittel, Verfahren zu dessen Herstellung und dessen Verwendung**
Meat-free foodstuff, process for the manufacture of the same and its use
Produit alimentaire sans viande, son procédé de fabrication et son utilisation

(30) Priorität: 06.04.2004 DE 102004016921
(43) Veröffentlichungstag der Anmeldung: 30.11.2005
(73) Patentinhaber: Fabry's Food & Snack GmbH & Co. KG, 54647 Dudeldorf (DE)
(72) Erfinder: Wellhäuser, Robert Dr,, 85221 Dachau (DE)
(74) Vertreter: HOFFMANN EITLE

(56) Entgegenhaltungen:
- DE-A1- 2 243 692
- DE-A1- 2 348 251
- DE-A1- 3 913 125
- US-A- 5 529 800
- US-A1- 2004 047 974
- US-B1- 6 485 775
- DATABASE WPI Section Ch, Week 200033 Derwent Publications Ltd., London, GB; Class D13, AN 2000-154318 XP002338119 & JP 2000 014358 A 18. Januar 2000 (2000-01-18) & DATABASE EPODOC EUROPEAN PATENT OFFICE, THE HAGUE, NL; & JP 2000 014358 A (QP CORP) 18. Januar 2000 (2000-01-18)

## Beschreibung

Die Erfindung betrifft ein Lebensmittel, das Teile von Ei sowie Fett bzw. Öl und gegebenenfalls zugesetzte Zuschlagsstoffe, wie Gemüse, Früchte, Nüsse, Cerealien oder Gemische hiervon, enthält, sowie Verfahren zu dessen Herstellung und dessen Verwendung.

Es besteht ein Bedürfnis nach einem Basislebensmittel, das hohen ernährungsphysiologischen Anforderungen genügt und als Matrix gegebenenfalls zur Aufnahme wertvoller, weiterer Lebensmittel als Zuschlagsstoffe dienen kann. Hierbei soll dieses zum Verzehr durch verschiedenartige ethnische Gruppen unterschiedlichster Religionszugehörigkeit einsetzbar sein.

Lebensmittel sind z.B. aus EP-A1-0 571 626 und EP-B1-0 566 737 bekannt, die aus einer Emulsion unter Zufügung von Eigelb herstellbar sind. Eigelb enthält als natürlichen Emulgator Lecithin sowie Cholesterin.

Andere Ansätze, z.B. gemäss EP-A1-0 134 196 oder EP-A1-1 206 914, zielen auf "Mayonnaise-artige" Produkte ab, wobei es sich um Gemische aus Wasser, Öl und Essig handelt, die mit Eigelb emulgiert und mit Gewürzen, Salz, Zucker und Geschmacksstoffen versetzt sind.

Es sind auch Lebensmittel bekannt, die Fleisch- oder Fischprodukte simulieren, z.B. EP-A1-0 018 153, wobei Carrageenan oder Glucomannan als Geliermittel dienen, und die Gele auf über 100°C erhitzt werden.

Eine Salatsoße mit Mayonnaise-artiger Textur, Aussehen und Geschmack auf Basis von Eiweiß, Öl und Stärke ist weiterhin aus DE 2348251 bekannt. JP 2000014358 offenbart eine Eiweiß-Zusammensetzung beinhaltend Öl und Stärke zur Verwendung als Aufstrich.

Schliesslich sind in EP-B-0 667 747 Herstellungsverfahren für dehydratisierte Lebensmittel auf Eiweissbasis beschrieben, aus denen unter Zusatz von Lebensmittelsäuren saure Pulver erzeugt werden, die nach Rehydratisierung stabile Öl-in-Wasser-Emulsionen ergeben.

Der Erfindung liegt die Aufgabe zugrunde, Lebensmittel und Verfahren zu deren Herstellung zur Verfügung zu stellen, die ernährungsphysiologisch wertvoll, gut verträglich und frei von Fleisch bzw. Fleischprodukt sind. Diese sollen vorzugsweise ohne synthetische Zusätze, wie Emulgatoren, herstellbar sein. Auch der separate Zusatz von Lebensmittelsäuren soll verzichtbar sein. Das erfindungsgemässe Lebensmittel soll sich als solches, z.B. in schnittfester oder streichfähiger bzw. pastöser Form, erzeugen lassen, das unmittelbar für den Verzehr geeignet ist. Alternativ kann das Lebensmittel auch eine flexible Matrix bilden, die zur Aufnahme weiterer verzehrbarer Zuschlagsstoffe unterschiedlichster Art geeignet ist. Hierbei sollen sich die Zuschlagsstoffe in breitem Rahmen nach Art und Mengenanteil variieren lassen, ohne dass es zu einer Zerstörung bzw. wesentlichen Beeinträchtigung der Matrix kommt. Nach einer bevorzugten Ausführungsform der Erfindung ist das Lebensmittel im wesentlichen cholesterinfrei bzw. vollständig cholesterinfrei.

Diese Aufgabe wird durch die Bereitstellung eines Lebensmittels wie in Anspruch 1 definiert, gelöst.

Das Eiklar stellt das von Eidotter (Eigelb) befreite Eiweiss aus Geflügeleiern, vorzugsweise Hühnereiern, dar. Es kann als flüssiges Eiweiss, aber auch in getrockneter Form bzw. vorteilhaft als Gemisch Anwendung finden. Es ist cholesterinfrei.

Die Ölkomponente besteht vorzugsweise aus pflanzlichen Ölen, z.B. Sonnenblumenöl, Distelöl, Olivenöl und Gemische hiervon. Es können jedoch auch tierische Öle und Fette Anwendung finden.

Der Zusatz von Stärke erfolgt zur Einstellung der Viskosität bzw. Textur des Lebensmittels, ist jedoch unter ernährungsphysiologischen Gesichtspunkten entbehrlich. Die Stärke ist glutenfrei bzw. Stärke aus Leguminosen (vorzugsweise Erbsen), gegebenenfalls unter Zufügung von Ballaststoffen von Leguminosen oder Getreideballaststoffen. Diese kann nativ oder physikalisch modifiziert sein, z.B. als Instant-Stärke.

Die zugesetzten Cerealien bestehen vorzugsweise aus glutenarmen Getreidearten, wie Dinkel, Hirse, Quinoa, oder aus glutenfreien Getreidearten, wie Amarant, Buchweizen, Mais, Reis, oder aus Leguminosen, wie Erbsen, Linsen, Sojabohnen. Soweit technologisch oder ernährungsphysiologisch vorteilhaft, können ergänzend Ballaststoffe hinzugefügt werden. Der Zusatz von Getreide und Leguminosen kann aus ernährungsphysiologischen Gründen sowie zur Steuerung der Viskosität, der Textur und des Mundgefühls des Lebensmittels erfolgen.

Das erfindungsgemässe Lebensmittel zeichnet sich dadurch aus, dass es nicht säuredenaturiert wird. Es wird deshalb üblicherweise keine Säure zugesetzt. Der pH-Wert des Lebensmittels liegt vorzugsweise im bzw. um den Neutralbereich, bevorzugt bei einem pH von 6,5-7,7, kann jedoch allgemein im pH-Bereich von 5 bis 8 variieren.

Die Mengenanteile von Eiklar zur Ölkomponente können in einem breiten Bereich schwanken. Insbesondere ist es in Aussicht genommen, dass der Anteil an Eiklar in getrockneter und/oder flüssiger Form, bezogen auf Gewichtsprozent des Lebensmittels, im Bereich von 20 bis 68, und die Öl- bzw. Fettkomponente im Bereich von 15 bis 60 Gew.% liegt. Dabei liegt der Öl-Eiweiss-Quotient im Bereich von 2 bis 22, bezogen auf Gewichtsteile des Lebensmittels. Die mengenmässige Belastbarkeit der Eiklaremulsion zeigt sich z.B. in den nachstehenden Rezepturen, die in Gew.% angegeben sind.

| **Versuche** | **1** | **2** | **3** |
|---|---|---|---|
| Eiklar | 28,79 | 22,79 | 51,79 |
| Trockenei | 2,0 | 1,0 | 1,0 |
| Pflanzenöl | 50,0 | 60,0 | 27,0 |
| Wasser | 10,0 | 6,0 | 10,0 |
| Instant-Stärke | 4,0 | 4,0 | 5,0 |
| Kochsalz | 1,5 | 1,5 | 1,5 |
| Gewürze auf 100 | | | |

Die vorgenannten Rezepturen zeigten nach dem manuellen Vermengen der Rezepturbestandteile eine gelblich-beige Farbe und machten einen "emulgierten" Eindruck. Es waren keine Anzeichen von freiem Fett zu erkennen, auch nicht an den Händen, die sich alleine mit reinem Wasser reinigen liessen.

Weitere mengenmässige Ansätze, die nicht als Einschränkung verstanden werden sollen, sind wie folgt:

| **Basisbeispiele** | | | |
|---|---|---|---|
| Eiklar | 61,9 | 51,4 | 22,4 |
| Trockeneiklar | 0,5 | 1,0 | 2,0 |
| Speiseöl | 17,0 | 27,0 | 60,0 |
| Wasser | 10,0 | 10,0 | 6,0 |
| Stärke in Form von Cerealien (Amarant) | 7,0 | 7,0 | 6,0 |
| Speisesalz, Gewürze | 3,5 | 3,5 | 3,5 |
| Hefeextrakt | 0,1 | 0,1 | 0,1 |
| **Summe** | **100** | **100** | **100** |

Die vorgenannten Emulsionen lassen sich in der Viskosität der Rohmasse und Textur der Fertigprodukte durch Änderung der Anteile an Eiklar, Wasser und Stärke modifizieren.

Die vorstehenden Rezepturen belegen die breite Anwendbarkeit des Konzepts.

Alle Emulsionen können ohne Zusatzstoffe hergestellt werden. Die eingesetzte Stärke war aus Erbsen gewonnen, enthält somit kein allergenes Potential. Sie kann beispielsweise durch Ballaststoffe von Leguminosen oder Getreideballaststoffe ergänzt werden. Bei der Verarbeitung von Öl wird ein möglichst ausgewogenes Verhältnis von Ω-3-zu Ω-6-Fettsäuren angestrebt. Die Gehalte an Cholesterin sind, sofern keine Butter oder andere tierische Fette eingesetzt werden, praktisch gleich Null. Die Fertigprodukte entsprechen somit den Anforderungen an eine gesunde Ernährung.

Ein bevorzugtes erfindungsgemässes Lebensmittel enthält Öl, das zumindest teilweise, vorzugsweise vollständig, aus Rapsöl gebildet ist.

Nach einer weiteren bevorzugten Ausführungsform der Erfindung ist der Stärkezusatz zumindest teilweise in Form von Amarant, Buchweizen und/oder Quinoa ausgewählt.

Ein besonders vorteilhaftes erfindungsgemässes Lebensmittel enthält Rapsöl und zumindest eine Stärkekomponente, die unter Amarant, Buchweizen und Quinoa ausgewählt ist.

Die erfindungsgemässen Lebensmittel sind
(a) aus vorgelegtem Eiklar, wobei dieses ein Gemisch aus flüssigem und trockenem Eiklar sein kann,
(b) mit gegebenenfalls vorgewärmtem Öl
(c) durch Emulgieren des Öls
(d) zur Steuerung der Textur mit Stärkezusatz, z.B. in Form von Cerealien und/oder Leguminosen
(e) Einmischen von Salz und Gewürzen und
(f) Zufügung der Zuschlagsstoffe
erhältlich.

Vorteilhaft geht man bei der Herstellung der Lebensmittel derart vor, dass man
(a) Eiklar, gegebenenfalls als Gemisch aus flüssigem und trockenem Eiklar, vorlegt,
(b) hierin eine gegebenenfalls vorgewärmte Öl-und/oder Fettkomponente emulgiert,
(c) Stärke, z.B. in Form von Cerealien und/oder Leguminosen, zur Steuerung der Textur hinzufügt,
(d) Salz und Gewürze einarbeitet und vor oder nach einer etwaigen Pasteurisierung
(e) Zuschlagsstoffe zufügt.

Die Öl- bzw. Fettkomponente wird zweckmässig vorgewärmt. Vorteilhafte Temperaturen liegen über 40°C. Insbesondere kann man das Öl bzw. die Fettkomponente auf 40 bis 80°C, vorzugsweise 45 bis 70°C, vorwärmen.

Beim erfindungsgemässen Verfahren wird üblicherweise der Anteil an Eiklar zwischen 20 und 68 Gew.% und die Öl- bzw. Fettkomponente im Bereich von 15 bis 60 Gew.%, bezogen auf das Lebensmittel (ohne Zuschlagsstoffe), eingestellt.

Dabei ist es vorteilhaft, wenn man den Anteil an Stärke in Form von Cerealien und/oder Leguminosen im Bereich von 0 bis 6 Gew.%, vorzugsweise 1 bis 5 Gew.%, bezogen auf das Lebensmittel (ohne Zuschlagsstoffe), wählt.

Wenn man als Stärke glutenfreie Instant-Stärke, z.B. aus Erbsen, einsetzt, lässt sich die Viskosität, Rheologie und Textur der Basismatrix in weiten Bereichen elegant steuern, z.B. weich, pastös, streichfähig oder schnittfest.

Bei der Herstellung kann man vorteilhaft so vorgehen, dass man Eiklar, Wasser, gegebenenfalls Trockenei, Gewürze, Salz und Stärke bei Raumtemperatur vermischt und dann die gewählte Menge an vorgewärmtem Öl und/oder Fett langsam, z.B. unter Rühren, zufügt. Dabei soll die Denaturierung des Eiweisses vermieden werden. Danach kann das Gemenge in eine geeignete Emulgiervorrichtung, z.B. eine Kolloidmühle, eingegeben werden.

Soweit Zuschlagsstoffe mit hohem Wassergehalt eingebracht werden, z.B. Zucchini oder Gurken, können diese in fein zerkleinerter Form vor dem Emulgieren zugesetzt werden. Andere stückige Zutaten werden zweckmässig nach Fertigstellung der Emulsion eingebracht.

Die gegebenenfalls mit Zuschlagsstoffen versehene Emulsion kann dann pasteurisiert werden. Hierzu können diese z.B. in undurchlässige Kunstdärme eingeführt werden. Die Pasteurisierung kann beispielsweise im Wasserbad, z.B. 1 Stunde im Bereich von 70 bis 90°C, durchgeführt werden.

Die in Därme gefüllten Fertigprodukte können als Produkte sui generis, z.B. in Scheiben unterschiedlicher Dicke und Durchmesser, unter Vakuum oder in Schutzatmosphäre verpackt, angeboten werden. Sie können auch als Beläge für Croque, Baguette etc. eingesetzt werden.

Form und Dicke sind variabel gestaltungsfähig. So lassen sich auch - fleischfreie - Würstchen verschiedenen Kalibers sowie - fleischfreie - Produkte, wie Frikadellen, herstellen, die erhitzt oder gebraten zusammen mit Beilagen verzehrt werden können.

Rohmassen lassen sich ausserdem in einem Koextrusionsverfahren als Füllungen für Teiglinge verwenden, wobei Viskosität und Bindung der Rohmasse so zu gestalten sind, dass sie entweder auch nach der Erhitzung streichfähig bleiben oder erhitzungsbedingt schnittfest werden.

Als grobe Einlagen können Gemüse, Trockenfrüchte, Käse etc. mit jeweils fester Einbindung in die Grundmasse eingesetzt werden. Denkbar sind auch Lebensmittel, wie Früchte, Nüsse, Cerealien, Fisch etc.

Die erfindungsgemässen Lebensmittel lassen sich mit Vorteil als Brotaufstrich oder Snackbelag verwenden. Dabei schmeckt dieser besonders gut, wenn er Zuschlagsstoffe enthält, die vorzugsweise unter Gemüse, Früchten, Nüssen, Cerealien oder Gemischen hiervon ausgewählt sind.

Aber auch Fleisch oder Fleischerzeugnisse oder, alternativ bzw. zusätzlich, Milch- und Eiprodukte können eingearbeitet werden. Der Aufstrich kann mit Vorteil in einem aufgeschnittenen Brot bzw. Toast, z.B. einem Baguette, Anwendung finden. Das Weissbrot, der Toast etc. kann jedoch auch, was erfindungsgemäss bevorzugt sein kann, mit der Basismatrix aus im wesentlichen Eiklar und Öl bestrichen werden, wonach auf diese Grundlage dann z.B. Schinkenscheiben, geschnittenes Ei, Salatblätter, Wurst oder Fisch oder ein Gemisch hiervon aufgelegt werden, und gegebenenfalls eine zweite Brot- oder Toastscheibe daraufgelegt wird. Solche gesunde und ernährungsphysiologisch wertvolle, direkt verzehrbare Fertigprodukte sind ausdrücklich im Rahmen der Erfindung eingeschlossen und bevorzugt. Diese können z.B. in Tankstellen als Nahrungsmittel für unterwegs angeboten werden.

## Patentansprüche

1. Lebensmittel, das Teile von Ei sowie Fett bzw. Öl und gegebenenfalls zugesetzte Zuschlagsstoffe, wie Gemüse, Früchte, Nüsse, Cerealien oder Gemische hiervon, enthält, **dadurch gekennzeichnet, dass**
(1) es frei von Fleisch bzw. Wurst ist und
(2) auf Basis von Eiklar und
(3) darin emulgiertem Öl
(4) wobei der Öl-Eiklareiweiss-Quotient, auf Basis von Gew.% errechnet, im Bereich von 2 bis 22 liegt,
(5) unter Zusatz von Stärke
(6) schnittfest oder streichfähig formuliert ist, und
wobei das Lebensmittel dadurch erhältlich ist,
dass man
(a) Eiklar, gegebenenfalls unter Mitverwendung von Wasser, vorlegt,
(b) hierin eine Öl- bzw. Fettkomponente emulgiert,
(c) Stärke hinzufügt,
(d) Salz und Gewürze einarbeitet und vor oder nach einer etwaigen Pasteurisierung
(e) Zuschlagsstoffe zufügt.

2. Lebensmittel nach Anspruch 1, **dadurch gekennzeichnet, dass** es frei von synthetischem Emulgator ist oder ausschliesslich natürliche Emulgatoren enthält.

3. Lebensmittel nach Anspruch 1 oder 2, **dadurch gekennzeichnet, dass** die Stärke, z.B. in Form von Cerealien und/oder Leguminosen, glutenfrei ist.

4. Lebensmittel nach Anspruch 1, 2 oder 3, **dadurch gekennzeichnet, dass** es nicht säuredenaturiert oder frei von zugesetzter Säure ist.

5. Lebensmittel nach einem oder mehreren der vorhergehenden Ansprüche, **dadurch gekennzeichnet, dass** sein pH-Wert im Bereich von 5 bis 8, vorzugsweise 6,5 bis 7,7, liegt.

6. Lebensmittel nach einem oder mehreren der vorhergehenden Ansprüche, **dadurch gekennzeichnet, dass** der Anteil an Eiklar in getrockneter und/oder flüssiger Form, bezogen auf Gewichtsprozent des Lebensmittels, im Bereich von 20 bis 68, und die Öl- bzw. Fettkomponente im Bereich von 15 bis 60 Gew.% liegt.

7. Lebensmittel nach einem oder mehreren der vorhergehenden Ansprüche, **dadurch gekennzeichnet, dass** das Öl zumindest teilweise, vorzugsweise vollständig, aus Rapsöl gebildet ist.

8. Lebensmittel nach einem oder mehreren der vorhergehenden Ansprüche, **dadurch gekennzeichnet, dass** der Stärkezusatz zumindest teilweise in Form von Amarant, Buchweizen und/oder Quinoa gewählt ist.

9. Lebensmittel nach einem oder mehreren der vorhergehenden Ansprüche, **dadurch gekennzeichnet, dass** es Rapsöl und zumindest eine Stärkekomponente, die unter Amarant, Buchweizen und Quinoa ausgewählt ist, enthält.

10. Verfahren zur Herstellung des Lebensmittels nach einem oder mehreren der vorhergehenden Ansprüche, **dadurch gekennzeichnet, dass** man
(a) Eiklar, gegebenenfalls als Gemisch aus flüssigem und trockenem Eiklar, vorlegt,
(b) hierin eine gegebenenfalls vorgewärmte Öl- und/oder Fettkomponente emulgiert,
(c) Stärke, z.B. in Form von Cerealien und/oder Leguminosen, zur Steuerung der Textur hinzufügt,
(d) Salz und Gewürze einarbeitet und vor oder nach einer etwaigen Pasteurisierung
(e) Zuschlagsstoffe zufügt.

11. Verfahren nach Anspruch 10, **dadurch gekennzeichnet, dass** man die Ölkomponente auf 40 bis 80°C, vorzugsweise 45 bis 70°C, vorerwärmt.

12. Verfahren nach Anspruch 10 oder 11, **dadurch gekennzeichnet, dass** man den Anteil an Eiklar zwischen 20 und 68 Gew.% und die Öl- bzw. Fettkomponente im Bereich von 15 bis 60 Gew.%, bezogen auf das Lebensmittel (ohne Zuschlagsstoffe), einstellt.

13. Verfahren nach einem oder mehreren der Ansprüche 10 bis 12, **dadurch gekennzeichnet, dass** man den Anteil an Stärke, z.B. in Form von Cerealien und/oder Leguminosen, im Bereich von 0 bis 6 Gew.%, vorzugsweise 1 bis 5 Gew.%, bezogen auf das Lebensmittel (ohne Zuschlagsstoffe), wählt.

14. Verfahren nach Anspruch 13, **dadurch gekennzeichnet, dass** man glutenfreie Instant-Stärke einsetzt.

15. Verfahren nach einem oder mehreren der Ansprüche 10 bis 14, **dadurch gekennzeichnet, dass** die Emulgierung der Öl- und/oder Fettkomponente mit Rührstäben, Kolloidmühlen oder dergleichen durchgeführt wird.

16. Verfahren nach einem oder mehreren der Ansprüche 10 bis 14, **dadurch gekennzeichnet, dass** man das Eiklar ohne Zusatz von Emulgator mit der Ölkomponente emulgiert.

17. Verfahren nach einem oder mehreren der Ansprüche 10 bis 16, **dadurch gekennzeichnet, dass** man das Lebensmittel in Wurstform bzw. in Form von Wurstscheiben herstellt.

18. Verfahren nach einem oder mehreren der Ansprüche 10 bis 16, **dadurch gekennzeichnet, dass** man das Lebensmittel als streichfähige Masse texturiert.

19. Verwendung des Lebensmittels nach einem oder mehreren der Ansprüche 1 bis 9 als Brotaufstrich bzw. Snackbelag.

20. Verwendung des Lebensmittels nach einem oder mehreren der Ansprüche 1 bis 9 als Matrix für Zuschlagsstoffe, die vorzugsweise unter Gemüse, Früchten, Nüssen, Cerealien oder Gemischen hiervon ausgewählt sind.

21. Verwendung des Lebensmittels nach einem oder mehreren der Ansprüche 1 bis 9 als Matrix für Fleisch und/oder Fleischerzeugnisse und/oder Milch- oder Eiprodukte.

22. Verwendung des Lebensmittels nach einem oder mehreren der Ansprüche 1 bis 9 als Auflage in einem aufgeschnittenen Brot bzw. Toast, gegebenenfalls unter Zufügung von Gemüse, Obst, Früchten, Nüssen, Cerealien oder Gemischen hiervon.

23. Verwendung des Lebensmittels nach einem oder mehreren der Ansprüche 1 bis 9 in einem aufgeschnittenen Brot oder Toast unter Zufügung von Fleisch und/oder Fleischprodukten und/oder Milch- oder Eiprodukten.

24. Verwendung nach Anspruch 22 oder 23, **dadurch gekennzeichnet, dass** man als Brot ein Weissbrot bzw. Baguette oder ein Vollkornprodukt einsetzt.

## Claims

1. Foodstuff which contains parts of egg as well as fat or oil and optionally added supplements, such as vegetables, fruit, nuts, cereals or mixtures thereof, **characterised in that**
(1) it is free of meat or sausage and
(2) based on egg white and
(3) oil emulsified therein
(4) wherein the oil-egg white protein quotient, calculated on the basis of wt.%, lies in the range from 2 to 22,
(5) with addition of starch
(6) is formulated to be firm or spreadable, and
wherein the foodstuff can be obtained **in that**
(a) egg white, optionally with co-use of water, is presented,
(b) an oil or fat component is emulsified herein,
(c) starch is added,
(d) salt and spices are incorporated and before or after any pasteurisation
(e) supplements are added.

2. Foodstuff according to claim 1, **characterised in that** it is free of synthetic emulsifier or contains only natural emulsifiers.

3. Foodstuff according to claim 1 or 2, **characterised in that** the starch, for example in the form of cereals and/or pulses, is gluten-free,

4. Foodstuff according to claim 1, 2 or 3, **characterised in that** it is not acid-denatured or is free of added acid.

5. Foodstuff according to one or more of the preceding claims, **characterised in that** its pH value lies in the range from 5 to 8, preferably 6.5 to 7.7.

6. Foodstuff according to one or more of the preceding claims, **characterised in that** the proportion of egg white in dried and/or liquid form, relative to the weight per cent of the foodstuff lies in the range from 20 to 68, and the oil or fat component lies in the range from 15 to 60 wt.%.

7. Foodstuff according to one or more of the preceding claims, **characterised in that** the oil is formed at least partly, preferably completely, from rapeseed oil.

8. Foodstuff according to one or more of the preceding claims, **characterised in that** the starch additive is selected at least partly in the form of amaranth, buckwheat and/or quinoa.

9. Foodstuff according to one or more of the preceding claims, **characterised in that** it contains rapeseed oil and at least one starch component which is selected from amaranth, buckwheat and quinoa.

10. Process for producing the foodstuff according to one or more of the preceding claims, **characterised in that**
(a) egg white, optionally as a mixture of liquid and dry egg white, is presented,
(b) an optionally pre-heated oil and/or fat component is emulsified herein,
(c) starch, for example in the form of cereals and/or pulses, is added to control the texture,
(d) salt and spices are incorporated and before or after any pasteurisation
(e) supplements are added.

11. Process according to claim 10, **characterised in that** the oil component is pre-heated at 40 to 80°C, preferably 45 to 70°C.

12. Process according to claim 10 or 11, **characterised in that** the proportion of egg white is adjusted between 20 and 68 wt.% and the oil or fat component is adjusted in the range from 15 to 60 wt.%, relative to the foodstuff (without supplements).

13. Process according to one or more of claims 10 to 12, **characterised in that** the proportion of starch, for example in the form of cereals and/or pulses, is selected in the range from 0 to 6 wt.%, preferably 1 to 5 wt.%, relative to the foodstuff (without supplements).

14. Process according to claim 13, **characterised in that** gluten-free instant starch is used.

15. Process according to one or more of claims 10 to 14, **characterised in that** the emulsification of the oil and/or fat component is carried out using stirring rods, colloid mills or the like.

16. Process according to one or more of claims 10 to 14, **characterised in that** the egg white is emulsified with the oil component without addition of emulsifier.

17. Process according to one or more of claims 10 to 16, **characterised in that** the foodstuff is produced in sausage form or in the form of sausage slices.

18. Process according to one or more of claims 10 to 16, **characterised in that** the foodstuff is textured as a spreadable composition.

19. Use of the foodstuff according to one or more of claims 1 to 9 as a spread for bread or snack filling.

20. Use of the foodstuff according to one or more of claims 1 to 9 as a matrix for supplements which are selected preferably from vegetables, fruit, nuts, cereals or mixtures thereof.

21. Use of the foodstuff according to one or more of claims 1 to 9 as a matrix for meat and/or meat products and/or milk or egg products.

22. Use of the foodstuff according to one or more of claims 1 to 9 as a coating on sliced bread or toast, optionally with addition of vegetables, fruit, nuts, cereals or mixtures thereon.

23. Use of the foodstuff according to one or more of claims 1 to 9 on sliced bread or toast with addition of meat and/or meat products and/or milk or egg products.

24. Use according to claim 22 or 23, **characterised in that** white bread or baguette or a wholemeal product is used as the bread.

## Revendications

1. Produit alimentaire, contenant des parties d'oeuf, ainsi que de graisse ou respectivement d'huile et, le cas échéant, des additifs ajoutés, tels que des légumes, fruits, noix, céréales ou mélanges de ceux-ci, **caractérisé en ce que**
(1) il est exempt de viande ou respectivement de charcuterie, et
(2) est formulé à base de blanc d'oeuf, et
(3) d'huile y étant émulsifiée,
(4) le quotient huile-blanc d'oeuf, calculé sur une base de pourcentages en poids, étant situé dans la fourchette comprise entre 2 et 22,
(5) avec addition d'amidon,
(6) la formulation étant solide au découpage ou apte à être étalé, et
le produit alimentaire étant obtenu **en ce que** l'on a
(a) du blanc d'oeuf, le cas échéant avec utilisation conjointe d'eau,
(b) en y émulsifiant un composant huileux ou respectivement gras,
(c) en y ajoutant de l'amidon,
(d) en introduisant du sel et des épices et, avant ou après une éventuelle pasteurisation,
(e) en ajoutant des additifs.

2. Produit alimentaire selon la revendication 1, **caractérisé en ce qu'**il est exempt d'émulsifiant synthétique, ou contient exclusivement des émulsifiants naturels.

3. Produit alimentaire selon la revendication 1 ou 2, **caractérisé en ce que** l'amidon est sans gluten, par exemple se présente sous la forme de céréales et/ou de légumineux.

4. Produit alimentaire selon la revendication 1, 2 ou 3, **caractérisé en ce qu'**il n'est pas dénaturé à l'acide ou est exempt d'acide ajouté.

5. Produit alimentaire selon une ou plusieurs des revendications précédentes, **caractérisé en ce que** sa valeur de pH est située dans la fourchette comprise entre 5 et 8, de préférence entre 6,5 et 7,7.

6. Produit alimentaire selon une ou plusieurs des revendications précédentes, **caractérisé en ce que** la proportion de blanc d'oeuf, rapportée au poids du produit alimentaire, est située dans la fourchette comprise entre 20 et 68 % en poids, et celle en composants huileux ou gras est située dans la fourchette comprise entre 15 et 60 % en poids.

7. Produit alimentaire selon une ou plusieurs des revendications précédentes, **caractérisé en ce que** l'huile est formée, au moins partiellement, de préférence en totalité, d'huile de colza.

8. Produit alimentaire selon une ou plusieurs des revendications précédentes, **caractérisé en ce que** l'addition d'amidon est choisie au moins partiellement sous la forme d'amarante, de blé noir et/ou de quinoa.

9. Produit alimentaire selon une ou plusieurs des revendications précédentes, **caractérisé en ce qu'**il contient de l'huile de colza et au moins un composant amidon, choisi parmi l'amarante, le blé noir et le quinoa.

10. Procédé de fabrication d'un produit alimentaire selon une ou plusieurs des revendications précédentes, **caractérisé en ce que** l'on prend
(a) du blanc d'oeuf, le cas échéant sous forme de mélange composé de blanc d'oeuf liquide et séché,
(b) on y émulsifie un composant huileux et/ou gras, le cas échéant préchauffé,
(c) on y ajoute de l'amidon, par exemple sous la forme de céréales et/ou de légumineux, pour commander la texture,
(d) on introduit du sel et des épices et, avant ou après une éventuelle pasteurisation,
(e) on ajoute des additifs.

11. Procédé selon la revendication 10, **caractérisé en ce que** l'on préchauffe le composant huileux à une température située dans la fourchette comprise entre 40 et 80°C, de préférence entre 45 et 70°C.

12. Procédé selon la revendication 10 ou 11, **caractérisé en ce que** l'on règle la proportion de blanc d'oeuf, rapportée au produit alimentaire (sans additif), à une valeur située dans la fourchette comprise entre 20 et 68 % en poids, et celle en composants huileux ou gras à une valeur située dans la fourchette comprise entre 15 et 60 % en poids.

13. Procédé selon l'une ou plusieurs des revendications 10 à 12, **caractérisé en ce que** l'on choisit la proportion en amidon, par exemple se présentant sous la forme de céréales et/ou de légumineux, dans la fourchette située entre 0 et 6 % en poids, de préférence entre 1 et 5 % en poids (sans additif).

14. Procédé selon la revendication 13, **caractérisé en ce que** l'on utilise un amidon instantané sans gluten.

15. Procédé selon l'une ou plusieurs des revendications 10 à 14, **caractérisé en ce que** l'émulsification du composant huileux et/ou gras est effectuée avec des barres agitatrices, des moulins à colloïdes ou analogues.

16. Procédé selon l'une ou plusieurs des revendications 10 à 14, **caractérisé en ce que** l'on émulsifie le blanc d'oeuf sans addition d'émulsifiant avec le composant huileux.

17. Procédé selon l'une ou plusieurs des revendications 10 à 16, **caractérisé en ce que** l'on fabrique le produit alimentaire sous forme de saucisse, ou sous forme de tranches de saucisse.

18. Procédé selon l'une ou plusieurs des revendications 10 à 16, **caractérisé en ce que** l'on texture le produit alimentaire sous forme de masse facile à tartiner.

19. Utilisation du produit alimentaire selon l'une ou plusieurs des revendications 1 à 9, en tant que produit facile à tartiner sur du pain, ou en tant que garniture de snack.

20. Utilisation du produit alimentaire selon l'une ou plusieurs des revendications 1 à 9, en tant que matrice pour des additifs, sélectionnés de préférence parmi les légumes, fruits, noix, céréales ou mélanges de ceux-ci.

21. Utilisation du produit alimentaire selon l'une ou plusieurs des revendications 1 à 9, en tant que matrice pour de la viande et/ou des produits carnés et/ou des produits laitiers ou des ovoproduits.

22. Utilisation du produit alimentaire selon l'une ou plusieurs des revendications 1 à 9, en tant que base dans un pain tranché ou toast, le cas échéant avec addition de légumes, fruits, noix, céréales ou mélange de ceux-ci.

23. Utilisation du produit alimentaire selon l'une ou plusieurs des revendications 1 à 9, dans un pain tranché ou un toast, avec addition de viande et/ou de produits carnés et/ou de produits laitiers ou en tant qu'ovoproduits.

24. Utilisation selon la revendication 22 ou 23, **caractérisée en ce qu'**on utilise comme pain un pain blanc ou une baguette ou un produit de pain complet.
